**Europäisches Patentamt**

(19) **European Patent Office**

**Office européen des brevets**

(11) Veröffentlichungsnummer: **0 263 923 B1**

(12) **EUROPÄISCHE PATENTSCHRIFT**

(45) Veröffentlichungstag der Patentschrift:
11.10.89

(51) Int. Cl.⁴: **B01D 53/34**

(21) Anmeldenummer: 87109922.2

(22) Anmeldetag: 09.07.87

(54) Verfahren zur Reinigung von Rauchgasen.

(30) Priorität: 19.07.86  DE 3624461

(43) Veröffentlichungstag der Anmeldung:
20.04.88 Patentblatt 88/16

(45) Bekanntmachung des Hinweises auf die Patenterteilung:
11.10.89 Patentblatt 89/41

(84) Benannte Vertragsstaaten:
AT BE DE FR GB IT NL

(56) Entgegenhaltungen:
EP-A- 0 150 282
EP-A- 0 191 725
DE-A- 2 304 784
DE-B- 1 234 912

(73) Patentinhaber: BAYER AG,
D-5090 Leverkusen 1 Bayerwerk(DE)
Patentinhaber: METALLGESELLSCHAFT AG,
Reuterweg 14 Postfach 3724, D-6000 Frankfurt/M.1(DE)

(72) Erfinder: Dörr, Karl Heinz, Dipl.-Ing., Am Gonsenheimer
Spiess 6, D-6500 Mainz(DE)
Erfinder: Grimm, Hugo, Dipl.-Ing., Sudetenstrasse 37,
D-8760 Miltenberg(DE)
Erfinder: Neumann, Heinz, Dipl.-Ing., Neugasse 91,
D-6086 Riedstadt 4(DE)
Erfinder: Gerken, Rudolf, Dr., Ratherstrasse 79,
D-4150 Krefeld(DE)
Erfinder: Lailach, Günter, Dr., Bodelschwinghstrasse 23,
D-4150 Krefeld(DE)

## Beschreibung

Die vorliegende Erfindung betrifft ein Verfahren zur Wiederaufheizung von Rauchgasen nach einer Naßreinigung.

Üblicherweise fallen die gereinigten Rauchgase nach der Durchführung von Naß-Reinigungsverfahren zur Entschwefelung und/oder Entstickung mit Temperaturen von 40 - 55°C als wasserdampfgesättigte Gase an. Vor der Einleitung in einen Kamin müssen diese Gase jedoch auf mindestens 72°C erwärmt werden. Diese Erwärmung geschieht bevorzugt in Wärmetauschern unter Ausnutzung des Wärmeinhaltes des Rohgases. Die dabei auftretenden, durch Korrosion und Verschmutzung verursachten Probleme sind bekannt (vgl. "Dokumentation Rauchgasreinigung", VDI-Verlag, Sept. 1985). Noch problematischer ist die Aufheizung naßentschwefelter Rauchgase auf 100 - 140°C, um sie an Aktivkohle-Katalysatoren zu entsticken.

Bei der Wiederaufheizung der Gase im Regenerativwärmetauscher mit rotierender Speichermasse (Gavo) sind hohe Temperaturdifferenzen zwischen heißem Rohgas und wiederaufgeheiztem Reingas erforderlich. Besonders nachteilig sind die unvermeidlichen Leckageverluste.

Für das Aufheizen des Reingases mittels Strombrenner wird hochwertige Primärenergie in Form von Heizgas oder Öl benötigt.

Die Aufgabe der vorliegenden Erfindung ist es, ein Verfahren zur Verfügung zu stellen, welches die beschriebenen Nachteile der bekannten Verfahren nicht aufweist.

Überraschenderweise gelingt dies in einfacher und wirtschaftlicher Weise durch ein Verfahren, bei dem die Aufheizung der Rauchgase durch einen Kontakt mit 55 - 80 %iger Schwefelsäure erfolgt.

Gegenstand der vorliegenden Erfindung ist somit ein Verfahren zur Wiederaufheizung von Rauchgasen nach einer Naßreinigung, welches dadurch gekennzeichnet ist, daß die Wiederaufheizung der Rauchgase durch den Kontakt mit 55 - 80 %iger Schwefelsäure erfolgt.

Hierdurch gelingt es, eine Wiederaufheizung des Reingases nach einer Naß-Entschwefelung und/oder -Entstickung von 40 bis 55°C auf 70 - 150°C zu bewirken.

Besonders vorteilhaft ist das erfindungsgemäße Verfahren anwendbar für den Fall, daß die aufzuheizenden Rauchgase mindestens 90 % relative Feuchte bei Temperaturen zwischen 40 und 55°C aufweisen.

Es ist eine besonders bevorzugte Ausführungsform des erfindungsgemäßen Verfahrens, daß das bei der Wiederaufheizung der Rauchgase in der Schwefelsäure kondensierte Wasser durch Kontakt dieser Schwefelsäure mit heißem Rauchgas wieder verdampft wird.

Die Energie für die Wiederaufheizung des Rauchgases kann vorteilhaft dem heißen Rauchgas (Rohgas) entnommen werden.

Ebenso kann es aber auch vorteilhaft sein, daß die Energie für die Wiederaufheizung des Rauchgases ganz oder teilweise über Wärmetauscher der verdünnteren Schwefelsäure vor dem Kontaktieren dieser Säure mit heißem Rauchgas zugeführt wird.

Das erfindungsgemäße Verfahren eignet sich prinzipiell für die Wiederaufheizung aller möglichen nach einer Naßreinigung anfallenden Rauchgase. Insbesondere ist es anwendbar in Kombination mit Rauchgasentschwefelungsverfahren, wie sie z.B. in der DE-A 34 35 931 beschrieben sind.

Eine weitere vorteilhafte Ausführungsform des erfindungsgemäßen Verfahrens besteht darin, daß die beim Kontakt des heißen Rauchgases mit der Schwefelsäure abgeschiedenen Feststoffe aus einem Teilstrom der Schwefelsäure abgetrennt werden.

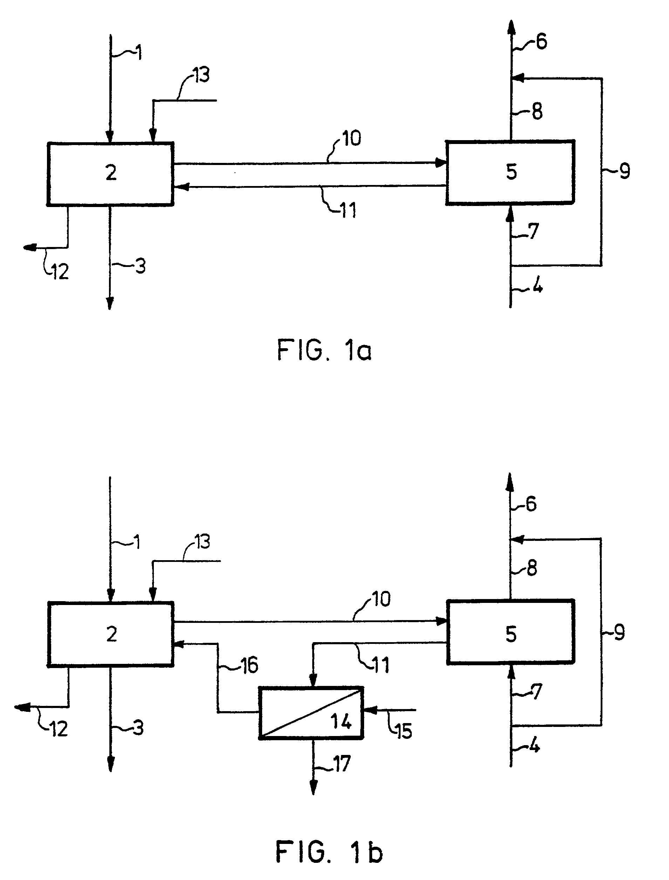

Die Fig. 1 - 4 sollen verschiedene Möglichkeiten des erfindungsgemäßen Verfahrens verdeutlichen.

Fig. 1 a stellt die einfachste Ausführungsform in Verbindung mit einem beliebigen Verfahren zur Naß-Entschwefelung und/oder Naß-Entstickung von Rauchgasen dar. Das Rohgas (1) wird in einem Wäscher (2) mit 55 - 70 %iger Schwefelsäure bei 80 - 120°C gewaschen. Dabei scheiden sich die staubförmigen Ve  runreinigungen des Rohgases und Schwefeltrioxid in der Schwefelsäure ab. Gleichzeitig wird durch Wasserverdampfung aus der Schwefelsäure eine Abkühlung der Rauchgase von 130 - 170°C auf 80 - 120°C bewirkt. Die vorgereinigten Rauchgase (3) werden der eigentlichen Rauchgasreinigungsanlage zugeleitet. Das bei 40 - 55°C wasserdampfgesättigte Reingas (4) wird in einem Wäscher (5) mit 55 - 75 %iger Schwefelsäure in Kontakt gebracht. Durch dabei kondensierenden Wasserdampf wird eine Erwärmung des Reingases auf 80 - 120°C bewirkt. Das wiederaufgeheizte Rauchgas (6) kann durch einen Kamin abgeleitet oder einer Denoxierungsanlage zugeleitet werden. Bei Ableitung durch einen Kamin ist nur eine Temperatur von 72 - 80°C erforderlich. In diesem Fall kann es besonders vorteilhaft sein, im Sinne einer geringeren Größe des Wäschers (5), nur einen Teilstrom (7) auf eine höhere Temperatur aufzuheizen und den aufgeheizten Teilstrom (8) mit dem unbehandelten Reingas-Teilstrom (9) vor der Einleitung in den Kamin zu mischen. Vorteilhaft wird der Wäscher (5) aus dem Sumpf des Wäschers (2) mit Schwefelsäure höherer Konzentration (10) beaufschlagt, während der Wäscher (2) mit Schwefelsäure geringerer Konzentration (11) aus dem Sumpf des Wäschers (5) beaufschlagt wird. Die Konzentration des Säurestromes (10) liegt üblicherweise um ca. 0,5 - 5 % höher als die des Säurestromes (11).

Da sich im Wäscher (2) staubförmige Bestandteile des Rohgases in der Schwefelsäure abscheiden, wird erfindungsgemäß ein Teilstrom (12) aus dem System abgezogen und filtriert oder anders von Feststoffen getrennt, um Probleme durch eine Anreicherung der Feststoffe zu vermeiden. Das Filtrat (13) wird in das System zurückgeführt.

Fig. 1 b zeigt eine Variante des erfindungsgemäßen Verfahrens, die eine größere Variablität bezüglich der Temperaturen des aufgeheizten Rauchgases (6) und des gewaschenen Rohgases (3) ermöglicht. Die Wiederaufheizung des Rauchgases (4) erfolgt ebenfalls durch Wasserdampfkondensation bei der Wäsche (5) mit 55 - 80 %iger Schwefelsäure (10). Die Wärme für die Wiederverdampfung des im Wäscher (5) kondensierten Wassers wird aber nicht (oder nur teilweise) dem Rohgas (1) entzogen, sondern ganz (oder teilweise) im Wärmetauscher (14), der mit Dampf (15) beheizt ist, der verdünnteren Schwefelsäure (11) zugeführt. Aus der um etwa 1 - 10 K erwärmten Säure (16) wird im Wäscher (2) beim Kontakt mit dem Rohgas (1) die im Wäscher (5) kondensierte Wassermenge verdampft. Das Dampfkondensat (17) kann als Prozeßwasser oder Kesselspeisewasser verwendet werden. Die Ausführung gemäß Fig. 1 b erfordert zwar Dampf als zusätzliche Energie, ermöglicht aber infolge höherer möglicher Säurekonzentration die Aufheizung des Gesamtrauchgasstromes auf Temperaturen bis 140°C, was z.B. für eine katalytische Denoxierung an Aktivkohle vorteilhaft ist.

Als Wäscher kommen die bekannten Apparate wie Waschtürme, Strahlwäscher oder Venturiwäscher infrage. Vorteilhaft wird ein Tropfenabscheider hinter jedem Wäscher eingebaut.

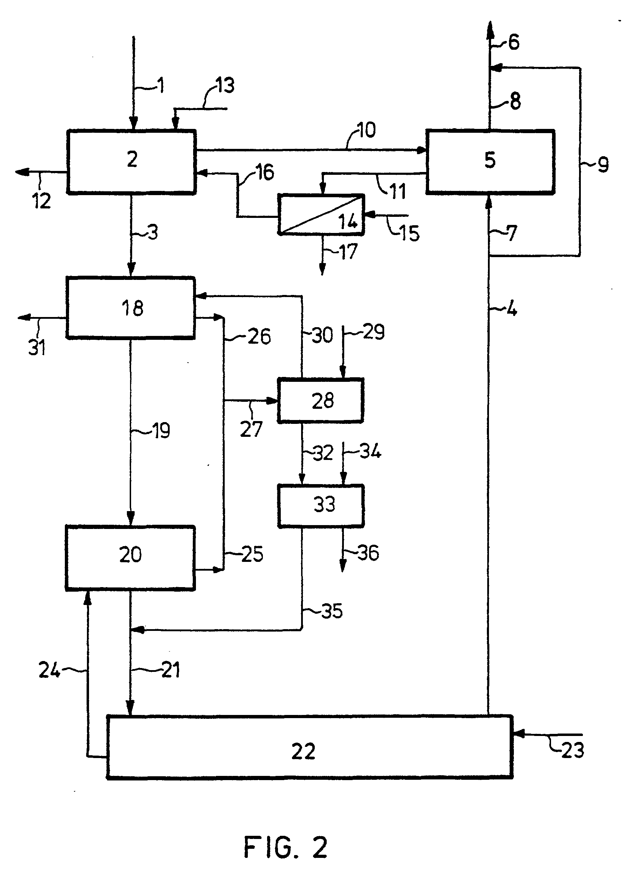

Fig. 2 stellt eine besonders vorteilhafte Anwendung des erfindungsgemäßen Verfahrens in direkter Kombination mit einer katalytischen Rauchgasentschwefelung gemäß der DE-A 34 35 931 dar. Das vorgereinigte Rohgas (3) wird in einem Wäscher (18) mit 55 - 75 %iger Schwefelsäure gewaschen. Dabei erfolgt infolge Wasserverdampfung aus der Schwefelsäure eine Abkühlung des Gases auf 80 - 120°C (19). Durch Wäsche mit 5 - 25 %iger Schwefelsäure in einem Wäscher (20) wird das Gas auf 48 - 55°C gekühlt. Gleichzeitig werden die Halogenwasserstoffe weitgehend aus dem Gas entfernt. Das gekühlte und vorgereinigte Rauchgas (21) wird durch einen Aktivkohlereaktor (22) geleitet, in dem $SO_2$ katalytisch mit Sauerstoff und Wasser zu Schwefelsäure umgesetzt wird. Das entschwefelte, bei 47 - 53°C wasserdampfgesättigte Rauchgas (4) wird zur Wiederaufheizung im Wäscher (5) geleitet. Die an der Aktivkohle im Reaktor (22) gebildete Schwefelsäure wird durch Besprühen der Kohle mit Wasser (23) als 3 - 20 %ige verdünnte Schwefelsäure (24) ausgewaschen und in den Wäscher (20) eingespeist. Hier erfolgt im Kontakt mit dem Rauchgas (19) eine Eindampfung auf 5 - 25 % $H_2SO_4$-Gehalt. Die Halogenwasserstoffe enthaltende 5 - 25 %ige Schwefelsäure (25) wird mit 55 - 75 %iger Schwefelsäure (26) aus Wäscher (18) in einem solchen Verhältnis gemischt, daß eine 40 - 60 %ige Mischung (27) resultiert, die in einen Stripper (28) eingespeist wird. Im Stripper (28) werden die Halogenwasserstoffe mit Luft (29) oder einem Teilstrom des Rauchgases (19) aus der Schwefelsäure ausgeblasen. Die weitgehend halogenwasserstofffreie Schwefelsäure (30) wird in dem Wäscher (18) eingespeist und durch Kontakt mit dem Rauchgas (3) auf 55 - 75 % $H_2SO_4$-Gehalt konzentriert. Aus Wäscher (18) wird reine Schwefelsäure dieser Konzentration als wirtschaftlich verwendbare Säure ausgespeist (31). Das aus dem Stripper (28) austretende Halogenwasserstoff-beladene Gas (32) wird in einem Wäscher (33) mit einer Waschflüssigkeit (34) gewaschen und danach dem Aktivkohlereaktor (22) zugeleitet (35). Die Halogenwasserstoffe werden mit der Waschflüssigkeit (z.B. Wasser oder Halogenwasserstoffsäure) aus dem System entfernt (36).

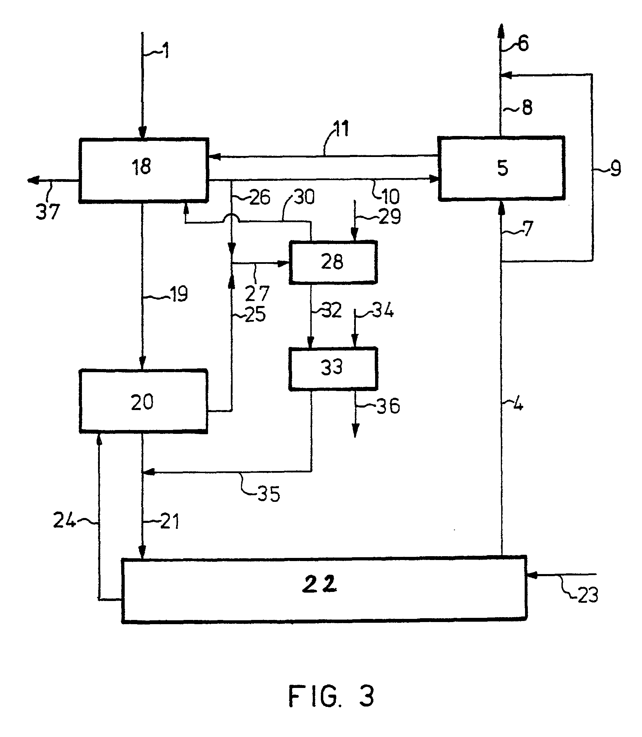

Fig. 3 stellt eine apparativ besonders einfache Kombination des erfindungsgemäßen Verfahrens zur Rauchgaswiederaufheizung mit dem Entschwefelungsverfahren gemäß der DE-A 34 35 931 dar. Sie ist vor allem dann anwendbar, wenn der Schwefeldioxidgehalt des Rohgases relativ gering ist. Das Entschwefelungsverfahren entspricht dem bei Fig. 2 beschriebenen. Abweichend von Fig. 2 entfällt aber die Vorreinigung im Wäscher (2) und die Zuführung von Wärme mittels Dampf (15) im Wärmetauscher (14). Die Wärme für die Verdampfung des im Wäscher (5) kondensierten Wassers wird ebenso wie die Wärme für die Eindampfung der 40 - 60 %igen Schwefelsäure (30) auf 55 - 75 % $H_2SO_4$-Gehalt im Wäscher (18) dem Rauchgas (1) entzogen.

Dem Vorteil des geringeren apparativen Aufwandes steht bei der Ausführung gemäß Fig. 3 eine geringere Flexibilität des Verfahrens gegenüber sowie die Tatsache, daß als Produkt der Entschwefelung statt einer reinen Schwefelsäure (31, Fig. 2) eine feststoffhaltige verunreinigte Schwefelsäure (37) anfällt.

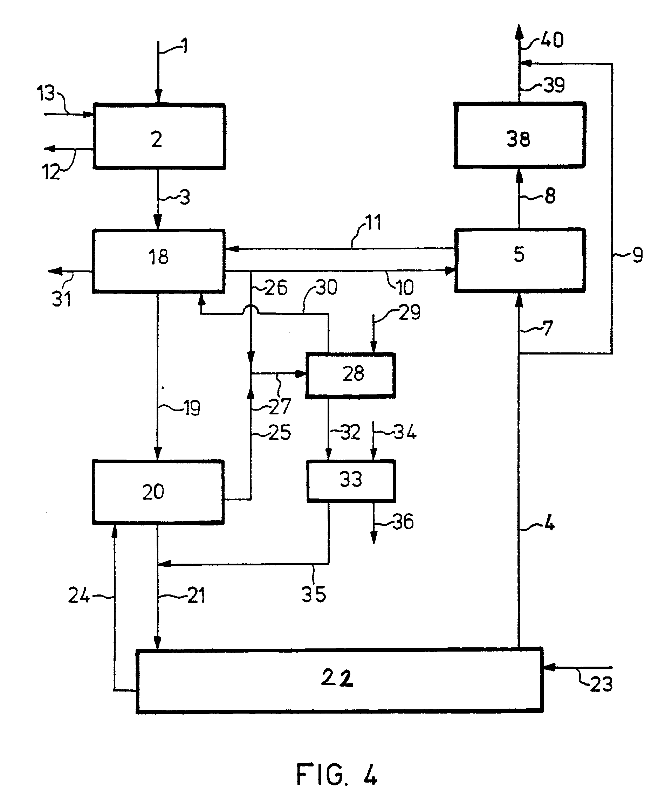

Besondere Vorteile, insbesondere im Hinblick auf die Reingasqualität, bietet die Ausführung des erfindungsgemäßen Verfahrens gemäß Fig. 4. Der Wäscher (2) dient nur der Abscheidung des Staubes in 75 - 80 %iger Schwefelsäure. Ein Teil der Säure (12) wird kontinuierlich oder diskontinuierlich dem System entnommen. Nach Abtrennung der Feststoffe aus diesem Teil wird die Säure (13) wieder in den Wäscher zurückgeführt. Die Aufheizung des Gesamtstromes (4) oder eines Teilstromes (7) des Reingases erfolgt im Wäscher (5) mit feststofffreier Säure aus Wäsche (18) wie vorher beschrieben. Durch die Verwendung feststofffreier Schwefelsäure (10) ergeben sich besonders günstige Bedingungen für die Abscheidung mitgerissener Säuretröpfchen aus dem aufgeheizten Gasstrom (8). Insbesondere kann der Tropfenabscheider (38) auch vorteilhaft mit Glasfaser-Filterkerzen zur vollständigen Abscheidung von Feinsprüh ausgerüstet werden. Das aufgeheizte Reingas (39) kann ohne Probleme, gegebenenfalls nach Zumischen eines nicht aufgeheizten Teilstromes (9), in die Atmosphäre abgeleitet werden (40).

Die oben beschriebenen Verfahrensvarianten stellen mögliche Ausführungen des erfindungsgemäßen Verfahrens dar, ohne einschränkend zu wirken. Kombinationen dieser Ausführungen und Variationen im Sinne der Erfindung sind möglich. Die folgenden Auslegungsbeispiele sollen die Vorteile des Verfahrens weiter verdeutlichen.

<u>Beispiel 1</u>

Die Wiederaufheizung des Reingases erfolgt unter Ausnutzung eines Teiles der Rohgaswärme gemäß Fig. 1 a. 300.000 m³/h Rauchgas (1) mit 7,8 % Feuchte, 3 g $SO_2$/m³ 200 mg HCl/m³, 15 mg HF/m³ und 50 mg Staub/m³ (alle Volumenangaben bezogen auf Standardbedingungen) werden in einem Waschturm (2) mit zwei übereinanderliegenden Düsenrosten im Gegenstrom mit 300 m³/h 64 %iger Schwefelsäure (11) gewaschen. Dabei kühlt das Rohgas (1) von 130 auf 90°C ab. Nach Durchströmen eines Tropfenabscheiders wird das staubfreie Gas (3) mit 9,9 % Feuchte zur Entschwefelungs- und/oder Entstickungsanlage weitergeleitet. Beim Kontakt mit der Schwefelsäure werden stündlich 6 t $H_2O$ aus der Säure verdampft.

Die im Waschturm (2) auf 64,8 % $H_2SO_4$-Gehalt konzentrierte Schwefelsäure (10) wird aus dem Sumpf des Waschturmes abgezogen und in den Waschturm (5) eingespeist, der im Gegenstrom zur Schwefelsäure vom Reingas durchströmt wird. Das wasserdampfgesättigte Reingas (4) hat eine Temperatur von 50°C und eine Feuchte von 12,1 %, entsprechend einer relativen Feuchte von 100%. Durch Wasserdampfkondensation und in geringem Maße durch Übertragung von fühlbarer Wärme aus der Schwefelsäure erfolgt eine Erwärmung des Reingases auf ca. 89°C. Über einen Tropfenabscheider wird das wiederaufgeheizte Reingas (6) in den Kamin abgeleitet.

Die Schwefelsäure aus dem Sumpf des Waschturmes (5) wird zur Bedüsung in den Waschturm (2) gefördert. Aus dem Schwefelsäurekreislaufsystem werden die Feststoffe durch Filtration oder Sedimentation abgetrennt, wofür die Be handlung eines geringen Teilstromes (12) ausreicht, der nach Abtrennung der Feststoffe wieder in das System eingespeist wird (13).

## Beispiel 2

Ein Rohgasstrom (1) mit einer Zusammensetzung analog Beispiel 1 fällt mit 150°C an. Die Entschwefelung erfolgt gemäß der DE-A 34 35 931. Das Reingas soll vor der Einleitung in den Kamin auf 75°C aufgeheizt werden. Für die Aufheizung mittels Strombrenner waren 350 m³ Erdgas/h (i.N.) vorgesehen.

Durch Anwendung des erfindungsgemäßen Verfahrens erfolgt die Wiederaufheizung mittels eines Teiles der Rohgaswärme (entspr. Fig. 3). Im Waschturm (5) wird nur die Hälfte (7) des Reingases (4) im Kontakt mit 69 %iger Schwefelsäure (10) von 51 auf 100°C aufgeheizt. Durch Vermischen des aufgeheizten Teilstromes (8), der nur noch eine Feuchte von 10,5 % hat, mit dem wasserdampfgesättigten Teilstrom (9) des Reingases (4) erhält man bei Einleitung des Reingases (6) in den Kamin eine Temperatur von 75°C. Durch Kondensation von 2,8 t $H_2O$/h im Waschturm (5) wird die Schwefelsäure (190 t/h) auf 68 % $H_2SO_4$ -Gehalt verdünnt. Im Waschturm (18), in dem das kondensierte Wasser wieder verdampft wird, werden zusätzlich 4,7 t $H_2O$/h aus der Schwefelsäure (30) verdampft, die bei der Entschwefelung gemäß der DE-A 34 35 931 anfällt. Der aus dem Rohgas abgeschiedene Staub wird mit der anfallenden 69 %igen Schwefelsäure (37) aus dem System ausgespeist und kann von dieser abgetrennt werden.

Im Waschturm (18) wird das Rohgas von 150 auf 102°C abgekühlt. Es wird mit einer Feuchte von 10,4 % zur Rauchgasentschwefelung weitergeleitet (19).

## Beispiel 3

Rohgas mit einer Temperatur von 130°C soll gemäß der DE-A 34 35 931 entschwefelt werden und das Reingas zwecks Denoxierung mittels Aktivkohlekatalysator auf 110°C aufgeheizt werden. Da die Rohgaswärme für die Eindampfung der Schwefelsäure verbraucht wird, die bei der Entschwefelung anfällt, soll die Wiederaufheizung mittels Dampf erfolgen. Die Zusammensetzung des Rohgases entspricht Beispiel 1. Die Wiederaufheizung erfolgt entsprechend Fig. 1 b. Von 300.000 m³/h Reingas (4) mit einer Feuchte von 13,8% und einer Temperatur von 52°C wird ein Teilstrom (7), entsprechend 75 % des gesamten Reingases, durch einen Waschturm (5) geleitet, in dem er mit 330 m³/h 77,8 %iger Schwefelsäure (10) in Kontakt gebracht wird. Durch Kondensation von 8 t $H_2O$/h aus dem Reingas erwärmt sich dieses auf 128°C. Das aufgeheizte Reingas (8) wird mit dem unbehandelten Reingasteilstrom (9) gemischt und mit 110°C (6) zur Denoxierungsanlage geleitet. Die Schwefelsäure (10) wird im Waschturm (5) auf 76,6 % $H_2SO_4$ verdünnt und auf 128°C abgekühlt. Aus dem Sumpf des Waschturmes (5) wird diese Säure (11) durch einen Röhrenwärmetauscher (14) gefördert, aus dem sie mit 153°C austritt und in den Waschturm (2) eingespeist wird (16). Der Wärmetauscher wird mit 10 bar-Dampf (15) beheizt; das Kondensat (17) kann bei der Dampferzeugung wiederverwendet werden. Im Waschturm (2) werden aus der Schwefelsäure (16) 8 $t_2O$/h verdampft, und der Staub aus dem Rohgas (1) ausgewaschen. Das Rohgas (3) hat nach dieser Wäsche eine Temperatur von 130°C und eine Feuchte von 10,5 %. Aus einem Teilstrom (12) wird der Staub abgetrennt; die staubfreie Säure (13) wird in den Waschturm (2) zurückgeführt.

## Patentansprüche

1. Verfahren zur Wiederaufheizung von Rauchgasen nach einer Naßreinigung, dadurch gekennzeichnet, daß die Wiederaufheizung der Rauchgase durch den Kontakt mit 55 - 80 %iger Schwefelsäure erfolgt.

2. Verfahren gemäß Anspruch 1, dadurch gekennzeichnet, daß die aufzuheizenden Rauchgase mindestens 90 % relative Feuchte bei Temperaturen zwischen 40 und 55°C aufweisen.

3. Verfahren gemäß einem der Ansprüche 1 oder 2, dadurch gekennzeichnet, daß das bei der Wiederaufheizung der Rauchgase in der Schwefelsäure kondensierte Wasser durch Kontakt dieser Schwefelsäure mit heißem Rauchgas wieder verdampft wird.

4. Verfahren gemäß einem oder mehrerer der Ansprüche 1 bis 3, dadurch gekennzeichnet, daß die Energie für die Wiederaufheizung der Rauchgase dem heißen Rauchgas entnommen wird.

5. Verfahren gemäß einem der Ansprüche 1 bis 3, dadurch gekennzeichnet, daß die Energie für die Wiederaufheizung der Rauchgase ganz oder teilweise über Wärmetauscher der verdünnteren Schwefelsäure vor dem Kontaktieren dieser Säure mit heißem Rauchgas zugeführt wird.

6. Verfahren gemäß einem der Ansprüche 1 bis 5, dadurch gekennzeichnet, daß die beim Kontakt des heißen Rauchgases mit der Schwefelsäure abgeschiedenen Feststoffe aus einem Teilstrom der Schwefelsäure abgetrennt werden.

## Claims

1. Process for reheating exhaust gases after washing characterised in that the exhaust gases are reheated by contacting with 55–80% strength sulphuric acid.

2. Process according to claim 1, characterised in that the exhaust gases to be heated have at least 90% relative moisture at temperatures between 40 and 55°C.

3. Process according to one of claims 1 or 2, characterised in that the water condensed in the sulphuric acid when the exhaust gases are reheated, is re-evaporated by contacting this sulphuric acid with hot exhaust gas.

4. Process according to one or more of claims 1 to 3, characterised in that the energy for reheating the exhaust gases is taken from the hot exhaust gas.

5. Process according to one of claims 1 to 3, characterised in that the energy for reheating the exhaust gases is fed completely or partially via heat exchangers to the weaker sulphuric acid before contacting this acid with hot exhaust gas.

6. Process according to one of claims 1 to 5, characterised in that the solids, separated out when the hot exhaust gas is contacted with the sulphuric acid, are removed from a branch stream of the sulphuric acid.

## Revendications

1. Procédé de réchauffement de fumées après une épuration par voie humide, caractérisé en ce que le réchauffement des fumées est effectué par contact avec de l'acide sulfurique à 55–80%.

2. Procédé suivant la revendication 1, caractérisé en ce que les fumées à chauffer présentent une humidité relative d'au moins 90% à des températures comprises entre 40 et 55°C.

3. Procédé suivant l'une des revendications 1 ou 2, caractérisé en ce que l'eau condensée dans l'acide sulfurique lors du réchauffement des fumées est réévaporée par contact de cet acide sulfurique avec de la fumée chaude.

4. Procédé suivant une ou plusieurs des revendications 1 à 3, caractérisé en ce que l'énergie de réchauffement des fumées est empruntée à la fumée chaude.

5. Procédé suivant l'une des revendications 1 à 3, caractérisé en ce que l'énergie de réchauffement des fumées est fournie en totalité ou en partie par des échangeurs de chaleur à l'acide sulfurique dilué avant le contact de cet acide avec la fumée chaude.

6. Procédé suivant l'une des revendications 1 à 5, caractérisé en ce que les matières solides déposées par contact de la fumée chaude avec l'acide sulfurique sont séparées d'un courant partiel de l'acide sulfurique.

FIG. 1a

FIG. 1b

FIG. 2

FIG. 3

FIG. 4